# EUROPÄISCHE PATENTANMELDUNG

(11) **EP 4 389 496 A1**
(43) Veröffentlichungstag der Anmeldung: **26.06.2024**
(21) Anmeldenummer: 23215997.0
(22) Anmeldetag: 12.12.2023
(51) Int. Cl.: B60L 3/10, B60L 7/18, B60L 15/20

(54) **VERFAHREN ZUM GENERATORISCHEN ABBREMSEN EINES FLURFÖRDERZEUGS**

(30) Priorität: 21.12.2022 DE 102022134302
(71) Anmelder: Jungheinrich Aktiengesellschaft, 22047 Hamburg (DE)
(72) Erfinder: Göpner, Oliver, 23845 Oering (DE); Stechmann, Ralf, 21641 Apensen (DE)
(74) Vertreter: Hauck Patentanwaltspartnerschaft mbB

(57) **Zusammenfassung**

Verfahren zum generatorischen Abbremsen eines Flurförderzeugs mit einer Drehzahlmesseinrichtung für ein angetriebenes Rad und einer generatorischen Bremseinrichtung, deren Bremsmoment einstellbar ist, das folgende Verfahrensschritte aufweist:
• Erzeugen eines generatorischen Bremsmoments (a) für das angetriebene Rad ansprechend auf ein Bremsanforderungssignal,
• Bestimmen einer Drehzahl (n_ist) des angetriebenen Rades und eines anliegenden generatorischen Bremsmoments (a_ist),
• Verringern des Bremsmoments (a) um einen vorbestimmten ersten Wert (a _vermindert), wenn die Drehzahl (n_ist) des angetriebenen Rades für eine vorbestimmte Mindestdauer (z) unter einer Minimaldrehzahl (n_min) liegt,
• Erhöhen des Bremsmoments (a) um einen zweiten vorbestimmten Wert (a_plus), wenn die Drehzahl (n_ist) des angetriebenen Rades größer als die Minimaldrehzahl (n_min) ist und das anliegende Bremsmoment (a _ist) kleiner als ein vorbestimmtes maximales Bremsmoment (a_max).

## Beschreibung

Die vorliegende Erfindung betrifft ein Verfahren zum generatorischen Abbremsen eines Flurförderzeugs. Neben einem mechanischen Abbremsen, bei dem Bewegungsenergie in Form von Wärme verlorengeht, ist gerade für elektrisch betriebene Flurförderzeuge ein generatorisches Bremsen von zunehmender Bedeutung, um die Reichweite und Betriebsdauer der Batterien zu verlängern.

Aus EP 1,225,078 B1 ist ein Verfahren zur Beeinflussung der Traktion oder des Bremsmoments an mindestens einem Antriebsrad eines Flurförderzeugs bekannt geworden. Bei dem Verfahren wird der Schlupf zwischen Antriebsrad und Untergrund durch Vergleich von gemessener oder errechneter Umfangsgeschwindigkeit des Antriebsrads und gemessener Fahrzeuggeschwindigkeit bestimmt. Wird ein übermäßiger Schlupf festgestellt, so greift ein hinter dem Drehzahlregler angeordneter Schlupfregler ein, um ein Solldrehmoment entsprechend zu korrigieren.

Aus EP 2,181,877 ist ein Flurförderzeug bekannt geworden, das ein Erkennungssystem besitzt, um ein durchdrehendes oder blockierendes Antriebsrad zu detektieren. Die Erkennung basiert auf einem momentanen und einem berechneten Drehmomentwert für den Motor, wobei die Beschleunigung oder das Abbremsen reduziert wird, wenn eine Differenz zwischen berechnetem und momentanem Drehmomentwert des Motors vorliegt.

Aus DE 199 34 496 A1 ist ein Bremssystem für ein Flurförderzeug mit einem elektrischen Antriebsmotor bekannt geworden, bei dem ein die Drehgeschwindigkeit des Antriebsrades direkt oder indirekt erfassender Drehzahlsensor vorgesehen ist, dessen Ausgangssignal der Steuereinheit zugeführt wird, um bei einem während des Bremsvorgangs blockierenden Antriebsrad das Bremsmoment zu reduzieren.

Der Erfindung liegt die Aufgabe zugrunde, ein Verfahren zum generatorischen Abbremsen eines Flurförderzeugs bereitzustellen, das ohne zusätzliche Komponenten bei unterschiedlichen Fahrsituationen effizient mit einem kurzen Bremsweg bremst.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das Verfahren gemäß Anspruch 1 ist vorgesehen und bestimmt zum generatorischen Bremsen eines Flurförderzeugs. Beim generatorischen Bremsen wird ein elektrischer Antriebsmotor als Generator angesteuert, sodass durch die abbremsende Bewegung des Fahrzeugs ein elektrischer Strom erzeugt wird. Das Flurförderzeug ist ferner mit einer Drehzahlmesseinrichtung für ein angetriebenes Rad ausgestattet und mit einer generatorischen Bremseinrichtung. Die generatorische Bremseinrichtung kann beispielsweise Teil einer Motorsteuerung oder einer Fahrzeugsteuerung sein. Mit der generatorischen Bremseinrichtung ist es möglich, die Größe des wirkenden Bremsmoments einzustellen. Bei dem Verfahren wird das generatorische Bremsmoment für das angetriebene Rad ansprechend auf ein Bremsanforderungssignal erzeugt. Es wird ferner eine aktuelle Drehzahl des angetriebenen Rads bestimmt, ebenso wie der Wert des anliegenden generatorischen Bremsmoments. Wenn die Drehzahl des angetriebenen Rades für eine vorbestimmte Mindestdauer unter einer Minimaldrehzahl liegt, wird das anliegende Bremsmoment um einen vorbestimmten ersten Wert verringert. Ist die Drehzahl des angetriebenen Rades dagegen größer als die Minimaldrehzahl und das anliegende Bremsmoment kleiner als ein vorbestimmtes maximales Bremsmoment, dann wird das Bremsmoment um einen zweiten vorbestimmten Wert erhöht. Bei dem erfindungsgemäßen Verfahren führt die Verringerung des Bremsmoments bei einer zu geringen Drehzahl dazu, dass ein Blockieren des Antriebsrades vermieden wird. Zugleich stellt das Erhöhen des Bremsmoments um einen zweiten vorbestimmten Wert sicher, dass das vorbestimmte maximale Bremsmoment erreicht wird. Mit der Kombination beider Schritte wird im Ergebnis sichergestellt, dass ein Bremsvorgang nahezu optimal mit nicht zu großer Abweichung von einem theoretisch optimalen Bremsmoment erreicht wird. Hierzu muss berücksichtigt werden, dass zwar für das generatorische Bremsen des Flurförderzeugs ein theoretisch optimales Bremsmoment vorliegt, bei dem das Flurförderzeug bei einem kurzen Bremsweg ohne Blockieren des Rades abgebremst werden kann. Dieser theoretische Wert ist jedoch nicht bekannt und hängt stark von den Umgebungsbedingungen ab, so dass grundsätzlich das generatorische Abbremsen einen Kompromiss erfordert, bei dem das generatorische Bremsmoment in seiner Größe derart bestimmt ist, dass es nicht zu einem Blockieren des Antriebsrades führt und zugleich der Bremsweg bis zum Stillstand des Flurförderzeugs nicht zu sehr verlängert wird.

In einer bevorzugten Weiterbildung ist die vorbestimmte Mindestdauer, die verstreichen muss, bevor eine Verringerung des Bremsmoments erfolgt, durch einen Zähler erzeugt, der mit der Zeit bis zu einem maximalen Wert hochgezählt wird, bevor das Bremsmoment um den ersten Wert vermindert wird. Bei der Bestimmung der Zeitdauer ist einerseits darauf zu achten, dass das Bremsmoment nicht zu früh vermindert wird, beispielsweise weil das Rad beim Überfahren einer Kante oder Schwelle für einen kurzen Zeitpunkt steht. Andererseits darf die vorbestimmte Zeitdauer auch nicht zu groß gewählt sein, weil sonst das generatorische Bremsen zu spät einsetzt und der Bremsweg sich mehr als notwendig verlängert.

Es hat sich als zweckmäßig erwiesen, die vorbestimmte Zeitdauer über einen Zähler zu bestimmen, der nach jeder Verminderung des Bremsmoments zurückgesetzt wird. Dies führt dazu, dass bei einer mehrmaligen Verminderung des Bremsmoments dieses nur schrittweise nach Ablauf der Zeitdauer durchgeführt werden kann. Grundsätzlich kann die Bremseinrichtung ein hydraulisches oder mechanisch aufgebrachtes Bremsmoment gemeinsam mit einem generatorischen Bremsmoment kombinieren. Bevorzugt ist die Bremseinrichtung so eingerichtet, dass das Bremsen ausschließlich generatorisch erfolgt. Das generatorische Bremsen hat den besonderen Vorteil, dass die Größe des Bremsmoments genau vorgegeben und schrittweise erhöht und erniedrigt werden kann.

Das Verfahren wird so lange wiederholt, wie ein Bremsanforderungssignal vorliegt. Dies bedeutet, dass ansprechend auf ein Bremsanforderungssignal das Verfahren eingeleitet wird und abläuft, bis kein Bremsanforderungssignal mehr vorliegt. Das Bremsanforderungssignal kann von einer Bedienperson des Flurförderzeugs vorgegeben werden. Selbstverständlich kann das erfindungsgemäße Verfahren auch für den Bremsvorgang eingesetzt werden, wenn das Bremsanforderungssignal automatisch generiert wird, beispielsweise um eine Kollision mit einem anderen Fahrzeug zu vermeiden.

Die eingesetzte Bremseinrichtung ist dadurch gekennzeichnet, dass das wirksame Bremsmoment bis zu einem maximalen Bremsmoment erhöht wird. Auf diese Weise kann sichergestellt werden, dass beim generatorischen Bremsen keine Überlastung der elektrischen Elemente oder des Motors erfolgt.

Eine bevorzugte Ausführungsform der Erfindung wird nachfolgend anhand der Figuren erläutert. Es zeigt:
- Fig. 1: den schematischen Aufbau eines angetriebenen Rades für ein Flurförderzeug,
- Fig. 2: ein Flussdiagramm zu dem Verfahren,
- Fig. 3: die Drehzahl eines Rades sowie das anliegende Bremsmoment bei einem Bremsvorgang mit blockierendem Rad und
- Fig. 4: ein Vergleich des erfindungsgemäßen generatorischen Bremsverfahrens im Gegensatz zu einem blockierenden Rad.

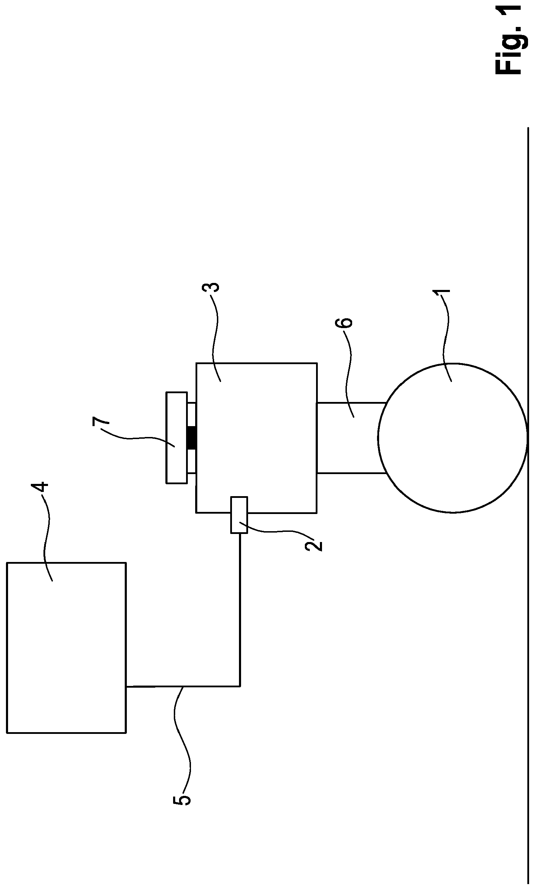

Fig. 1 zeigt in einer schematischen Ansicht ein Antriebsrad 1 für ein Flurförderzeug. Flurförderzeuge besitzen ein Fahrwerk mit drei oder vier Rädern. Insbesondere bei einem Fahrwerk mit drei Rädern hat es sich bewährt, den antreibenden Motor 3 über dem Antriebsrad 1 anzuordnen. Der Motor 3 ist über ein Getriebe 6 mit dem Antriebsrad 1 verbunden. Der Motor 3 besitzt einen Drehzahlsensor 2, der über eine Sensorleitung 5 mit einer Steuerung 4 verbunden ist. Eine mechanisch betätigte Bremse 7 wirkt auf den Motor 3, um über das Getriebe 6 das Antriebsrad 1 mechanisch zu bremsen. Das generatorische Bremsen erfolgt über eine entsprechende Ansteuerung des Motors 3, wobei der Motor 3 seine Funktion wechselt und als Generator elektrische Leistung erzeugt, die über ein Ladegerät (nicht dargestellt) in eine am Fahrzeug mitgeführte Batterie eingespeist werden kann.

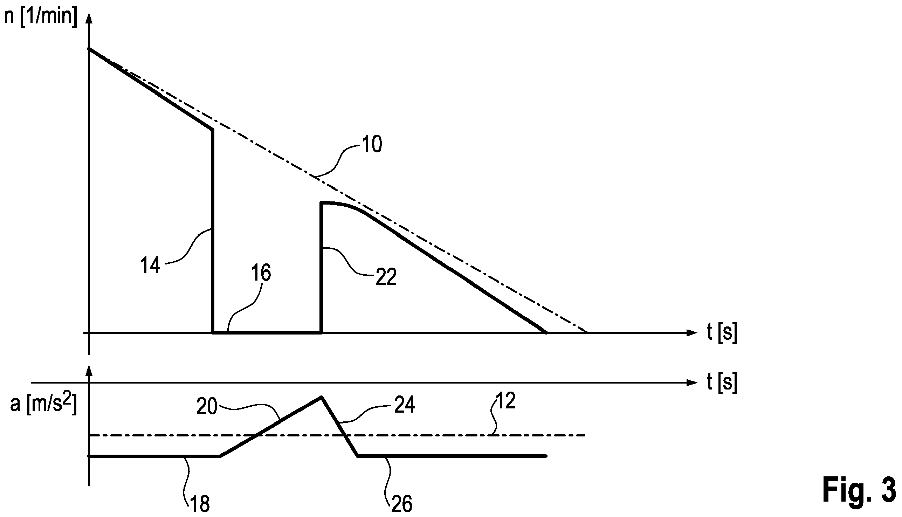

Figur 3 zeigt zwei Diagramme, einerseits die Drehzahl n über der Zeit t und andererseits das zugehörige Bremsmoment a über der Zeit t. Zu beachten ist, dass das Bremsmoment als negative Beschleunigung vorzeichenrichtig aufgetragen ist. Die strichpunktierte Linie zeigt den Verlauf der Drehzahl 10 bei einem reduzierten Bremsmoment 12, mit dem sichergestellt wird, dass ein Rutschen des Rades nicht auftritt.

Die durchgezogene Linie zeigt den Verlauf der Drehzahl 10 über der Zeit, wenn es zu einer Blockade des Rades kommt. Hierbei tritt in der Zeitspanne ein blockiertes Rad 16 auf, das durch eine fehlende Drehzahl gekennzeichnet ist. Der korrespondierende Verlauf des Bremsmoments 18 ist durch die durchgezogene Kurve der Beschleunigung dargestellt. Zunächst ist zu erkennen, dass das Bremsmoment 18 größer ist als das reduzierte Bremsmoment 12. Bei Einsetzen des blockierenden Rades 14 wird das Bremsmoment 20 reduziert. Aufgrund des Vorzeichenwechsels bei der Beschleunigung bedeutet dies, dass die negative Beschleunigung vergrößert wird. Die Reduzierung des Bremsmoments 20 erfolgt schrittweise entlang der Gerade, bis das blockierte Rad sich wieder löst und wieder Drehzahl 22 aufnimmt. Mit steigender Drehzahl 22 wird entlang einer Geraden wieder das Bremsmoment 24vergrößert, dies bedeutet bezogen auf die negative Beschleunigung, dass die Beschleunigung verkleinert wird. Die Erhöhung des Bremsmoments wird fortgesetzt, bis wieder ein maximales Bremsmoment 26 erreicht ist.

In dem Diagramm über die Drehzahl ist zu erkennen, dass trotz des blockierten Rades insgesamt das Flurförderzeug früher zum Stehen kommt. Die Zeit bis zum Stillstand des Fahrzeuges ist kürzer als bei dem reduzierten Bremsmoment 12.

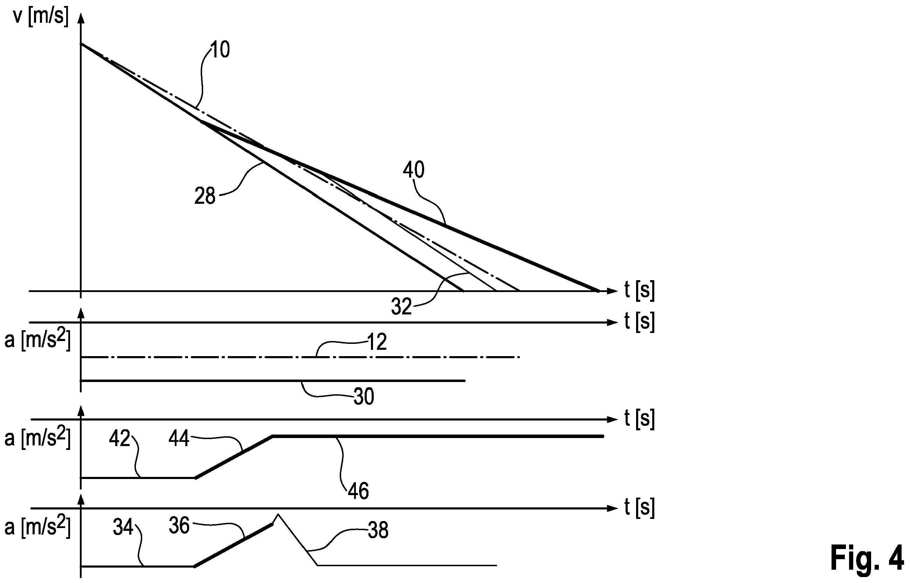

Figur 4 fasst verschiedene Formen des Bremsens und der zugehörigen Bremsmomente noch einmal zusammen, wobei hier zur Darstellung eine Geschwindigkeits-Zeit Diagramm gewählt wurde. Die strichpunktierte Linie 10 entspricht dem reduzierten Bremsmoment aus Figur 3. Die steiler verlaufende Geschwindigkeitskurve 28 entspricht dem theoretisch maximalen Bremsmoment, das bei konstantem, generatorischem Bremsmoment ohne Blockieren des Rads erzielt werden kann. Wichtig für das Verständnis ist, dass das zugehörige maximale Bremsmoment 30 als konstantes Bremsmoment angesetzt wird und somit über die gesamte Zeit das Flurförderzeug gleich stark verzögert. Ein theoretisch maximaler Wert hängt stark von den konkreten Umständen ab, wie beispielsweise der Beschaffenheit des Lagerbodens, der Abnutzung des Rades, der Beladung des Flurförderzeugs, eventuell vorhandener Feuchtigkeit und vielen weiteren Faktoren. Für die Steuerung des Flurförderzeugs in der konkreten Situation ist das theoretisch maximale generatorische Bremsmoment 30 nicht zuverlässig bestimmbar. Es dient lediglich als Vergleichswert, um sich zu orientieren, wie stark andere Bremsstrategien hiervon abweichen.

Figur 4 zeigt ferner den Geschwindigkeitsverlauf 32 bei der Verwendung des erfindungsgemäßen Verfahrens. Wie bereits in Figur 3 dargestellt, ist die Bremszeit etwas kürzer als der Bremsvorgang mit dem reduzierten Bremsmoment. Eine einfache oder mehrfache Blockade des Rades ist in der Geschwindigkeitskurve 32 nicht zu erkennen, an dem Bremsmoment 34 ist aber zu erkennen, dass in dem Abschnitt 36 vermindert und in dem Abschnitt 38 wieder verstärkt gebremst wird.

Der Geschwindigkeitsverlauf 40 spiegelt die Situation eines blockierenden Rades beim Bremsverlauf wider. Das dabei angelegte Bremsmoment 42 führt bei einer Blockade des Rades zu einem nachlassenden Bremsmoment 44. Anders als das reduzierte Bremsmoment 36 beruht das nachlassende Bremsmoment 44 auf dem blockierten Rad, das die Haftung verliert und von daher als rutschendes Rad ein geringeres Bremsmoment 46 aufbringt.

Insgesamt ist an den Geschwindigkeitsverläufen qualitativ nachzuvollziehen, dass der Geschwindigkeitsverlauf über die Zeit bei dem erfindungsgemäßen Verfahren deutlich besser als die Alternativen mit einem reduzierten konstanten Bremsmoment 12 und einem blockierenden Rad 40 sind. Die Abweichung gegenüber dem theoretisch optimalen Geschwindigkeitsverlauf 28 bleibt bestehen, zeigt aber, dass durchaus vergleichbare Werte erzielt werden können.

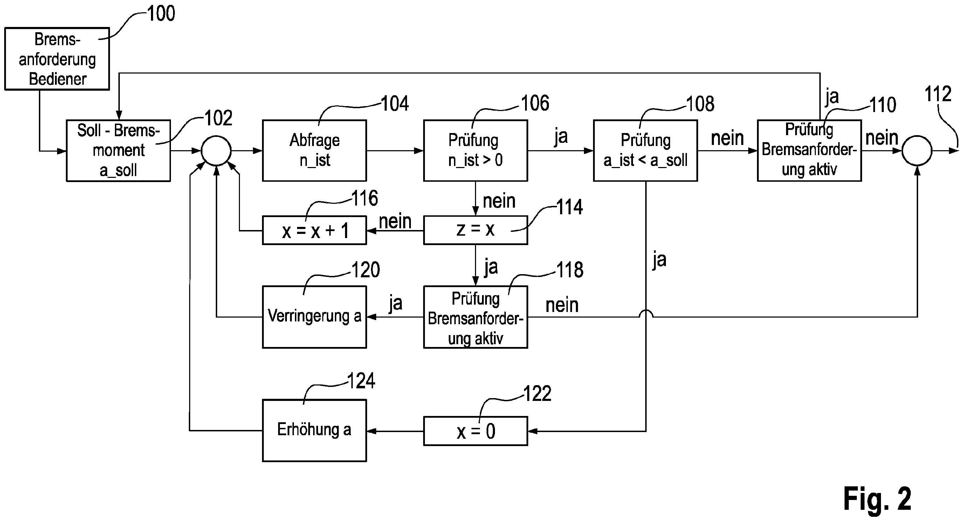

Figur 2 zeigt in einem Flussdiagramm das erfindungsgemäße Verfahren. Ausgelöst wird das Verfahren in diesem Beispiel durch eine Bremsanforderung 100 durch den Bediener. Die Bremsanforderung führt je nach vorliegender Stärke, beispielsweise nach dem Winkel des gedrückten Bremspedals, zur Bestimmung eines Sollbremsmoments a_soll in Schritt 102. Dieses Sollbremsmoment a_soll ist bestimmt für den Bremsvorgang. Im Laufe des Bremsvorgangs erfolgt zunächst die Abfrage 104 nach dem Istwert der Raddrehzahl. Anhand des Istwerts wird geprüft, ob das Rad blockiert. Die Blockade wird ausgeschlossen, wenn die Drehzahl > 0 ist, also eine Drehung anzeigt (n_ist > 0). Liegt ein drehendes Rad vor, so wird in einer Abfrage 108 geprüft, ob das aktuelle Bremsmoment a_ist bereits den Sollwert a_soll erreicht hat. Ist dies der Fall, also ist a_ist < a_soll nicht zutreffend, so erfolgt die Prüfung 110, ob weiterhin eine Bremsanforderung vorliegt. Ist dies der Fall, so kehrt das Verfahren zur Bestimmung des Sollbremsmoments 102 zurück. Liegt keine Bremsanforderung mehr vor, so endet das Verfahren in 112.

Liegt während der Zeit, in der die Bremsanforderung aktiv ist, nun aufgrund der Prüfung 106 der Fall vor, dass das Rad blockiert, so wird in der Prüfung 114 geprüft, ob bereits die vorgesehene Zeitdauer erreicht wurde. Die Zeitdauer wird durch die Variable X bestimmt, deren Inkrement 116 bestimmt wird. Bei der Prüfung 114 wird überprüft, ob die Variable X bereits den Maximalwert Z erreicht hat. Ist dies nicht der Fall, so erfolgt das Inkrement 116 für die Variable X. Ist der Maximalwert, der beispielsweise auf einer Größe von 2 bis 15, bevorzugt 5 bis 10 Iterationsschritte gesetzt werden kann, erreicht, so wird in Schritt 118 erneut geprüft, ob die Bremsanforderung aktiv ist. Diese Prüfung entspricht der Prüfung in Schritt 110. Ist die Bremsanforderung weiterhin aktiv und blockiert das Rad, so wird in Schritt 120 das Bremsmoment verringert. Dies bedeutet, dass ein kleineres Bremsmoment angreift, also die negative Beschleunigung vergrößert wird.

Der zweite Fall, der zu betrachten ist, ist die Situation, dass das Antriebsrad nicht blockiert und das Bremsmoment noch nicht den vorgesehenen Sollwert a_soll erreicht hat. In diesem Fall wird die Variable mit der Setzung 122 auf Null zurückgesetzt. Dieser Schritt erfolgt, weil nicht länger eine Blockade des Rades vorliegt, sodass das während der Blockade aufgebaute Inkrement zurückgesetzt werden kann. Da die Prüfung 108 ergeben hat, dass noch nicht das Sollbremsmoment erreicht wurde, erfolgt eine Erhöhung 124 des Bremsmoments. Die Abfolge der Schritte 108, 122 und 124 stellt sicher, dass im Laufe des Verfahrens das angelegte Bremsmoment dem Bremsmoment a_soll entspricht. Das Bremsmoment a_soll ist hierbei größer bestimmt, als ein Bremsmoment, das ohne Anpassung verwendet werden kann.

### Bezugszeichenliste

- 1: Antriebsrad
- 2: Drehzahlsensor
- 3: Motor
- 4: Steuerung
- 5: Sensorleitung
- 6: Getriebe
- 7: Bremse
- 10: Drehzahlverlauf bei reduziertem Bremsmoment
- 12: reduziertes Bremsmoment
- 14: blockierendes Rad
- 16: Zeitspanne der Blockade
- 18: Bremsmoment
- 20: reduziertes Bremsmoment
- 22: wieder drehendes Rad
- 24: zunehmendes Bremsmoment
- 26: maximales Bremsmoment
- 28: Geschwindigkeitsverlauf zu maximalem Drehmoment
- 30: generatorisches Bremsmoment
- 32: Geschwindigkeitsverlauf bei variablem generatorischem Bremsmoment
- 34: maximales generatorisches Bremsmoment
- 36: abnehmendes Bremsmoment
- 38: zunehmendes Bremsmoment
- 40: Geschwindigkeitsverlauf mit blockiertem Rad
- 42: angelegtes Bremsmoment
- 44: reduziertes Bremsmoment mit blockiertem Rad
- 46: geringeres Bremsmoment mit rutschendem Rad
- 100: Bremsanforderung
- 102: Sollbremsmoment
- 104: Abfrage
- 106: Prüfung
- 108: Prüfung
- 110: Prüfung
- 114: Prüfung
- 116: Inkrement
- 118: Prüfung
- 120: Verringerung
- 122: Zurücksetzen der Variablen
- 124: Erhöhung des Bremsmoments

## Patentansprüche

1. Verfahren zum generatorischen Abbremsen eines Flurförderzeugs mit einer Drehzahlmesseinrichtung (2) für ein angetriebenes Rad (1) und einer generatorischen Bremseinrichtung, deren Bremsmoment einstellbar ist, das folgende Verfahrensschritte aufweist:
• Erzeugen eines generatorischen Bremsmoments (a) für das angetriebene Rad (1) ansprechend auf ein Bremsanforderungssignal,
• Bestimmen einer Drehzahl (n_ist) des angetriebenen Rades (1) und eines anliegenden generatorischen Bremsmoments (a_ist),
• Verringern des Bremsmoments (a) um einen vorbestimmten ersten Wert (a_vermindert), wenn die Drehzahl (n_ist) des angetriebenen Rades (1) für eine vorbestimmte Mindestdauer (z) unter einer Minimaldrehzahl (n_min) liegt,
• Erhöhen des Bremsmoments (a) um einen zweiten vorbestimmten Wert (a_plus), wenn die Drehzahl (n_ist) des angetriebenen Rades (1) größer als die Minimaldrehzahl (n_min) ist und das anliegende Bremsmoment (a_ist) kleiner als ein vorbestimmtes maximales Bremsmoment (a_max).

2. Verfahren nach Anspruch 1, **dadurch gekennzeichnet, dass** die vorbestimmte Zeitdauer, durch einen Zähler (n) erzeugt wird, der bis zu einem maximalen Wert (n_max) hochgezählt wird bevor das Bremsmoment um den ersten Wert vermindert wird.

3. Verfahren nach Anspruch 2, **dadurch gekennzeichnet, dass** der Zähler wieder auf Null gesetzt wird, wenn das Bremsmoment um den zweiten Wert erhöht wird.

4. Verfahren nach einem der Ansprüche 1 bis 3, **dadurch gekennzeichnet, dass** die Bremseinrichtung ausschließlich generatorisch bremst.

5. Verfahren nach einem der Ansprüche 1 bis 4, **dadurch gekennzeichnet, dass** das Verfahren solange wiederholt wird wie eine Bremsanforderungssignal vorliegt.

6. Verfahren nach einem der Ansprüche 1 bis 5, **dadurch gekennzeichnet, dass** die Bremseinrichtung das Bremsmoment bis zu dem maximalen Bremsmoment erhöht.
